# EUROPÄISCHE PATENTANMELDUNG

(11) **EP 4 517 926 A1**
(43) Veröffentlichungstag der Anmeldung: **05.03.2025**
(21) Anmeldenummer: 24190506.6
(22) Anmeldetag: 24.07.2024
(51) Int. Cl.: H01M 10/48, H01M 10/613, H01M 10/625, H01M 10/633, H01M 10/6568, H01M 10/66

(54) **KÜHLSYSTEM FÜR MINDESTENS EINEN ELEKTROCHEMISCHEN ENERGIESPEICHER EINES ELEKTRISCH ANTREIBBAREN FAHRZEUGS**

(30) Priorität: 31.08.2023 DE 102023208339
(71) Anmelder: Robert Bosch GmbH, 70442 Stuttgart (DE)
(72) Erfinder: Maurer, Martina, 71277 Rutesheim (DE); Woll, Christoph, 70839 Gerlingen (DE)

(57) **Zusammenfassung**

Kühlsystem (100) für mindestens einen elektrochemischen Energiespeicher (101) eines elektrisch antreibbares Fahrzeug (102).

## Beschreibung

Die Erfindung geht aus von einem Kühlsystem für mindestens einen elektrochemischen Energiespeicher eines elektrisch antreibbaren Fahrzeugs, einem Verfahren zum Betreiben eines Kühlsystems, einer Vorrichtung zum Betreiben eines Kühlsystems sowie einer Verwendung eines Kühlsystems gemäß dem Oberbegriff der unabhängigen Ansprüche.

### Stand der Technik

Aktuelle Kühlkonzepte für Batterien umfassen beispielsweise Module, bei denen die Batteriezellen auf Kühlplatten stehen, welche mittels eines Kühlkreislaufs wassergekühlt sind. Um eine Kühlwirkung zu verbessern können die Batteriezellen von Kühlschläuchen umgeben sein.

Nach einer Fahrt mit großer Last, also einem hohen elektrischen Strom, reicht diese Art von Kühlung aber für einen sofortigen Ladebeginn nicht aus, da die Batterie hierfür zu warm ist. Für eine bessere Kühlung muss das komplette Kühlkonzept überarbeitet werden, jedoch bleibt dabei trotzdem die Schwierigkeit der Wärmeabfuhr, da häufig die Kühlungen für Batterien, Leistungselektronik und E-Maschine "seriell" miteinander gekoppelt sind.

Ein Ladebeginn ist erst nach einer Abkühlung der Batterie möglich und dieser Abkühlvorgang kann viel Zeit in Anspruch nehmen. Insbesondere bei Nutzfahrzeugen soll möglichst keine Zeit mit Warten verbracht werden, da beispielsweise ein Fahrer des Nutzfahrzeugs üblicherweise eine Pausenzeit von 45 min zwischen den Lenkzeiten hat.

Zudem sollen die Batterien schnellgeladen, also mit einem hohen elektrischen Strom und großer elektrischer Leistung, beispielsweise 160 kW bis in den MW-Bereich, werden, was die Batterie weiterhin stark erwärmt. In einer Pausenzeit wird daher mittels DC-Schnellladen die Batterie möglichst vollgeladen, also bis zu einem maximalen Ladezustand (SoC) von 80% bis 85%. Ein Ladezustand von 100%, insbesondere um eine maximale Kapazität und Fahrzeugreichweite zu erreichen, ist mit einem Schnellladevorgang allein nicht möglich.

Daher sind Wartezeiten, welche durch die Batterien temperaturbedingt verursacht werden, an Ladestationen grundsätzlich inakzeptabel. Bei Nutzfahrzeugen bedeuten Wartezeiten, neben Ladezeiten und verkehrsbedingten Verzögerungen, einen finanziellen Aufwand, da Termine einzuhalten und diese alle sehr knapp bemessen sind. Eine weitere Verzögerung, beispielsweise wegen Abkühlvorgängen, durch einen notwendigen Ladevorgang ist daher inakzeptabel. Weiter reicht aufgrund der verkürzten Ladezeit ein Ladezustand nicht bis zur nächsten Pausenzeit, in der die Batterie wieder geladen werden muss.

Gemäß dem Stand der Technik werden heute Maßnahmen ergriffen, wie beispielsweise eine Leistungsreduzierung einige Kilometer vor Ladestationen, was den fließenden Verkehr beeinträchtigen kann und kein angenehmes Fahrverhalten ermöglicht, insbesondere wenn die Leistung reduziert wird und die Fahrstrecke eine Steigung umfasst.

Das Dokument US 2021/384564 A1 offenbart einen Akkupack und ein Verfahren zum externen Laden des Akkupacks. Das Batteriepaket kann einen Ladeanschluss umfassen, der zum Laden des Batteriepakets konfiguriert ist, einen Kühlkreislauf, der zum Kühlen des Batteriepakets in einem Fahrzeug konfiguriert ist, und eine Kühlschnittstelle, die zum Verbinden des Kühlkreislaufs mit einer externen Kühlvorrichtung außerhalb des Fahrzeugs konfiguriert ist.

Das Dokument US 2015 017 504 A1 offenbart ein Batteriemodul, das mehrere gestapelte Batterieeinheiten umfasst. Jede der Batterieeinheiten ist so angeordnet, dass eine Fläche einer Wärmeübertragungsplatte, die von einem aus einem Isoliermaterial gebildeten Batteriestützkörper gehalten wird, und eine Hauptfläche einer Batteriezelle einander gegenüberstehen.

Es ist Aufgabe der vorliegenden Erfindung, den Stand der Technik weiter zu verbessern. Diese Aufgabe wird gelöst durch die Merkmale der unabhängigen Ansprüche.

### Offenbarung der Erfindung

### Vorteile der Erfindung

Die erfindungsgemäße Vorgehensweise mit den kennzeichnenden Merkmalen der unabhängigen Ansprüche weist demgegenüber den Vorteil auf, dass das Kühlsystem für mindestens einen elektrochemischen Energiespeicher eines elektrisch antreibbaren Fahrzeugs
- einen ersten Kühlkreislauf, welcher im Wesentlichen innerhalb des elektrochemischen Energiespeichers angeordnet ist; und
- einen zweiten Kühlkreislauf, welcher vom ersten Kühlkreislauf getrennt ist und im Wesentlichen außerhalb des elektrochemischen Energiespeichers angeordnet ist, umfasst,
wobei der zweite Kühlkreislauf durch ein elektronisches Steuergerät eingeschaltet wird, wenn ein Ladezustand des elektrochemischen Energiespeichers einen vorgegebenen Soll-Ladezustand unterschreitet.

Ein Vorteil besteht darin, dass nach einem Fahrzyklus des elektrisch antreibbaren Fahrzeugs ein sofortiger Ladebeginn möglich ist, mehr Energie in einem vergleichbaren Zeitraum geladen werden kann und dadurch eine höhere Reichweite zur Verfügung steht.

Weitere vorteilhafte Ausführungsformen sind Gegenstand der Unteransprüche.

Gemäß einer vorteilhaften Ausgestaltung der Erfindung ist vorgesehen, dass der zweite Kühlkreislauf einen Kühlmitteltank mit Kühlmittel, mindestens eine Pumpe zum Umwälzen des Kühlmittels durch Schläuche des zweiten Kühlkreislaufs, mindestens ein Ventil, Kühlrippen und/oder Kühlplatten umfasst.

Ein weiterer Vorteil besteht darin, dass das Ventil ein Mehrwegeventil umfasst, mittels dem der zweite Kühlkreislauf mit einem von dem elektrisch antreibbaren Fahrzeugs räumlich getrennten externen Kühlkreislauf über mindestens einen Anschluss verbindbar ist. Dadurch wird eine Wärmeabfuhr während eines Ladevorgangs ermöglicht, wodurch ein Laden des elektrochemischen Energiespeichers mit hohen elektrischen Strömen ohne Unterbrechung, beispielsweise wegen Überschreitung von Temperaturgrenzen, ermöglicht wird.

Der erste Kühlkreislauf, der zweite Kühlkreislauf und/oder der externe Kühlkreislauf sind geschlossene Kühlkreisläufe.

Vorteilhafterweise umfassen der erste Kühlkreislauf, der zweite Kühlkreislauf und/oder der externe Kühlkreislauf ein flüssiges, beispielsweise Wasser mit einem Kühlmittelzusatz, Öl, und/oder gasförmiges Kühlmittel, beispielsweise Kohlenstoffdioxid.

Ein erfindungsgemäßes Verfahren zum Betreiben des Kühlsystems umfasst folgende Schritte:
a.1) Erfassen einer Temperaturgröße, welche eine Temperatur des elektrochemischen Energiespeichers repräsentiert;
a.2) Vergleichen der erfassten Temperaturgröße mit einer vorgegebenen Soll-Temperaturgröße;
a.3) Kühlen des elektrochemischen Energiespeichers mittels eines ersten Kühlkreislaufs in Abhängigkeit des Vergleichs;
b.1) Erfassen einer Ladezustandsgröße des elektrochemischen Energiespeichers, welche einen Ladezustand des elektrochemischen Energiespeichers repräsentiert;
b.2) Vergleichen des erfassten Ladezustandsgröße mit einer vorgegebenen Soll-Ladezustandsgröße;
b.3) Kühlen des elektrochemischen Energiespeichers mittels eines zweiten Kühlkreislaufs in Abhängigkeit des Vergleichs;
c.1) Erfassen einer Kühlgröße, welche einen Anschluss des zweiten Kühlkreislaufs an einen vom elektrisch antreibbaren Fahrzeugs räumlich getrennten externen Kühlkreislauf für einen Kühlvorgang repräsentiert;
c.2) Vergleichen der erfassten Kühlgröße mit einer vorgegebenen Soll-Kühlgröße;
c.3) Kühlen des elektrochemischen Energiespeichers mittels des zweiten Kühlkreislaufs und/oder des externen Kühlkreislaufs in Abhängigkeit des Vergleichs;

Eine erfindungsgemäße Vorrichtung zum Betreiben eines Kühlsystems für einen elektrochemischen Energiespeicher, umfassend mindestens einen Sensor, mindestens einen Schalter sowie mindestens ein Mittel, insbesondere ein elektronisches Batteriemanagementsteuergerät, sind eingerichtet, die Schritte des erfindungsgemäßen Verfahrens 6 durchzuführen.

Gemäß einer vorteilhaften Ausgestaltung der Erfindung ist ein Computerprogramm vorgesehen, umfassend Befehle, die bewirken, dass die Vorrichtung zum Betreiben eines elektrochemischen Energiespeichers die erfindungsgemäßen Verfahrensschritte ausführt.

Ferner ist ein maschinenlesbares Speichermedium vorgesehen, auf dem das Computerprogramm gespeichert ist.

Das erfindungsgemäße Kühlsystems und/oder das erfindungsgemäße Verfahren zum Betreiben des Kühlsystems findet Verwendung für elektrochemische Energiespeicher für Elektrofahrzeuge, Brennstoffzellenfahrzeuge, Hybridfahrzeuge, Plug-In-Hybridfahrzeuge, Luftfahrzeuge, Pedelecs oder E-Bikes.

### Kurzbeschreibung der Figuren

Ausführungsbeispiele der Erfindung sind in der Zeichnung dargestellt und in der nachfolgenden Beschreibung näher erläutert.

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Ferner können die im Folgenden beschriebenen Merkmale einzeln oder in einer beliebigen Kombination einen Gegenstand der Erfindung darstellen, wenn sich aus dem Kontext nicht explizit das Gegenteil ergibt.

Es zeigen:
Figur 1 eine schematische Darstellung einer ersten Ausführungsform eines erfindungsgemäßen Kühlsystems; und
Figur 2 ein Ablaufdiagramm einer Ausführungsform eines erfindungsgemäßen Verfahrens zum Betreiben eines Kühlsystems.

### Detaillierte Beschreibung der Ausführungsbeispiele

Gleiche Bezugszeichen bezeichnen in allen Figuren gleiche Vorrichtungskomponenten.

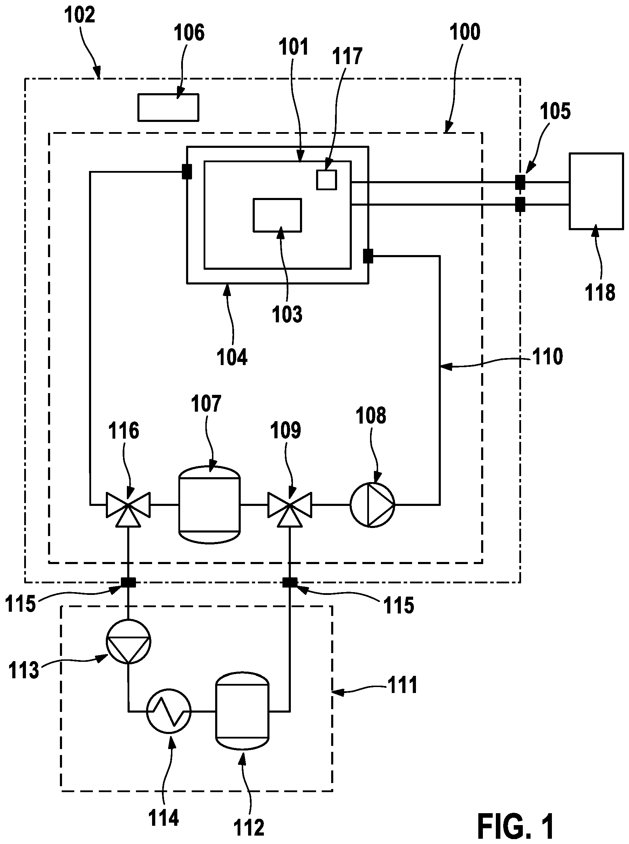

Figur 1 zeigt eine schematische Darstellung einer ersten Ausführungsform eines erfindungsgemäßen Kühlsystems 100. Ein elektrochemischer Energiespeicher 101 ist mittels elektrischer Anschlüsse 105 mit einem vom elektrochemischen Energiespeicher 101 räumlich getrennten Erzeuger und/oder Verbraucher elektrisch verbindbar, beispielsweise zum Laden des elektrochemischen Energiespeichers 101.

In der dargestellten Ausführungsform ist der elektrochemische Energiespeicher 101 mit einer Ladestation 118 elektrisch verbunden.

Das Kühlsystem 100 für den elektrochemischen Energiespeicher 101 eines elektrisch antreibbaren Fahrzeugs 102 umfasst einen ersten Kühlkreislauf 103, welcher im Wesentlichen innerhalb des elektrochemischen Energiespeichers 101 angeordnet ist. Der erste Kühlkreislauf 103 umfasst einen Kühlmitteltank mit einem Kühlmittel, eine Pumpe zum Umwälzen des Kühlmittels durch Schläuche des ersten Kühlkreislaufs 103, welche aus Gründen der Übersichtlichkeit nicht in Figur 1 dargestellt sind.

Das Kühlsystem umfasst ferner einen zweiten Kühlkreislauf 104, welcher vom ersten Kühlkreislauf 103 getrennt ist und im Wesentlichen außerhalb des elektrochemischen Energiespeichers 101, jedoch innerhalb des Fahrzeugs 102 angeordnet ist. Der zweite Kühlkreislauf 104 umfasst einen Kühlmitteltank 107 mit Kühlmittel, eine Pumpe 108 zum Umwälzen des Kühlmittels durch Schläuche 110 des zweiten Kühlkreislaufs 104, zwei Ventile 109, 116, sowie nicht dargestellte Kühlrippen und Kühlplatten zum effizienten Abführen von erzeugter Abwärme.

Häufig ist der elektrochemische Energiespeicher 101 an einer Position angebracht, an der bei konventionell angetriebenen Fahrzeugen der Tank angebracht ist. Der elektrochemische Energiespeicher 101 ist von einem Gehäuse umgeben. Um dieses Gehäuse können die Kühlrippen angebracht sein, damit Wärme, welche nicht vom ersten Kühlkreislauf 103 und/oder zweiten Kühlkreislauf 104 abtransportiert werden kann über die Kühlrippen abgeführt wird.

Ergänzend können zwischen den Kühlrippen noch Kühlschläuche 110 verlegt werden, um den Abtransport zu verstärken. Dies hätte zudem den Vorteil, dass insbesondere im Sommer bei hohen Temperaturen die Bodentemperatur fast doppelt so hoch ist wie die angegebene Umgebungstemperatur und diese Wärme an den elektrochemischen Energiespeicher 101 zusätzlich abgestrahlt wird und diese Wärme besser abgeführt werden kann. Befinden sich die Kühlschläuche 110 zwischen den Kühlrippen, so sind sie auch besser vor Beschädigungen, beispielsweise Steinschlag, geschützt. In einer weiteren Ausführungsform sind zwischen einzelnen elektrochemischen Energiespeichers 101 zusätzliche Kühlplatten eingebaut.

In der dargestellten Ausführungsform ist der zweite Kühlkreislauf 104 mittels den Ventilen 109, 116 über Anschlüsse 115 mit einem von dem elektrisch antreibbaren Fahrzeug 102 räumlich getrennten externen Kühlkreislauf 111 verbunden. Die Anschlüsse 115 sind in der dargestellten Ausführungsform von den elektrischen Anschlüssen 105 getrennt. In einer nicht dargestellten alternativen Ausführungsform umfassen die elektrischen Anschlüsse 105 die Anschlüsse 115.

Der externe Kühlkreislauf 111 umfasst einen Kühlmitteltank 112 mit Kühlmittel, eine Pumpe 113 zum Umwälzen des Kühlmittels durch Schläuche des externen Kühlkreislaufs 111 sowie einen Wärmetauscher 114 zum Abführen von Wärme.

Ein Steuergerät 106 ist mittels kabelgebundener, über nicht dargestellte Signalleitungen, und/oder kabelloser Verbindungen mit dem elektrochemischen Energiespeicher 101, dem ersten Kühlkreislauf 103, dem zweiten Kühlkreislauf, der ersten Pumpe 108, den Ventilen 109, 116, dem Sensor 117, den elektrischen Anschlüssen 105 und/oder den Anschlüssen 115 verbunden, insbesondere um Daten mittels Sensoren, beispielsweise Temperatursensoren, zu erfassen und/oder Aktoren, beispielsweise die Pumpe 108 und/oder die Ventile 109, 116, anzusteuern.

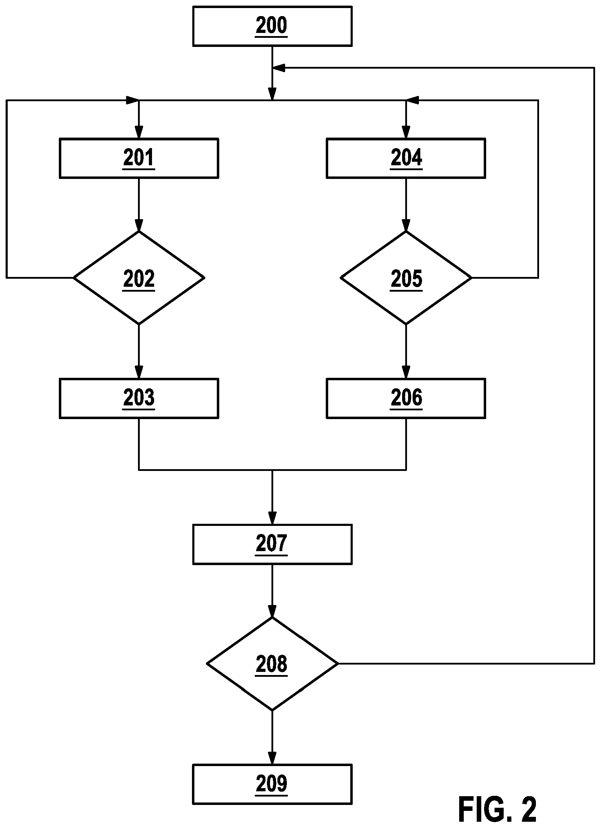

Figur 2 zeigt ein Ablaufdiagramm einer Ausführungsform eines erfindungsgemäßen Verfahrens zum Betreiben eines Kühlsystems. In Schritt 200 wird das Verfahren gestartet, beispielsweise wenn das elektrisch antreibbare Fahrzeug 102 gestartet wird.

In Schritt 201 wird eine Temperaturgröße, beispielsweise mit dem Sensor 117, erfasst, welche eine Temperatur des elektrochemischen Energiespeichers 101 repräsentiert.

In Schritt 202 wird die erfasste Temperaturgröße mit einer vorgegebenen Soll-Temperaturgröße verglichen, welche eine Soll-Temperatur des elektrochemischen Energiespeichers 101 repräsentiert.

In Schritt 203 wird der elektrochemische Energiespeicher 101 mittels eines ersten Kühlkreislaufs 103 gekühlt, wenn die erfasste Temperaturgröße eine vorgegebene Soll-Temperaturgröße überschreitet. Andernfalls wird das Verfahren in Schritt 201 fortgesetzt.

In Schritt 204 wird eine Ladezustandsgröße des elektrochemischen Energiespeichers 101 erfasst, welche einen Ladezustand des elektrochemischen Energiespeicher 101 repräsentiert.

In Schritt 205 wird die erfasste Ladezustandsgröße mit einer vorgegebenen Soll-Ladezustandsgröße verglichen, welche beispielsweise einen Soll-Ladezustand von 60% des elektrochemischen Energiespeichers 101 repräsentiert.

Der Soll-Ladezustand wird fahrzeugspezifisch vorgegeben und beträgt beispielsweise 60% des Ladezustands des elektrochemischen Energiespeichers. Dieser Soll-Ladezustand ist im Hinblick auf Schnellladevorgänge gewählt, da bei diesen nur bis ca. 80% des Ladezustands des elektrochemischen Energiespeichers 101 geladen wird.

Werte über 60% des Soll-Ladezustands laden den elektrochemischen Energiespeicher 101 nur gering, und dafür reicht auch eine kurze Ladezeit und Abkühlzeit aus.

Werte unterhalb 60% des Soll-Ladezustands können zu einem zu späten Einsetzen der Kühlung führen, da je nach Verkehrssituation sich die Pausenzeiten auch verändern können, beispielsweise aufgrund von Stau oder Vollsperrungen. Ab diesem Zeitpunkt unterstützt der externe Kühlkreislauf 111 den ersten, internen Kühlkreislauf 104 so lange beispielsweise die "Zündung an" ist. Mit "Zündung aus" läuft nur noch der erste, interne Kühlkreislauf 103 und/oder der zweite Kühlkreislauf 104 im Nachlauf. Der externe Kühlkreislauf 111 wird ausgeschaltet, da diese zu stark den elektrochemischen Energiespeicher 101 belasten würde.

In Schritt 206 wird der elektrochemische Energiespeicher 101 mittels eines zweiten Kühlkreislaufs 104 gekühlt, wenn die erfasste Ladezustandsgröße die Soll-Ladezustandsgröße unterschreitet. Andernfalls wird das Verfahren in Schritt 204 fortgesetzt.

In Schritt 207 wird eine Kühlgröße, welche einen Anschluss des zweiten Kühlkreislaufs 104 über Anschlüsse 115 an einen vom elektrisch antreibbaren Fahrzeugs 102 räumlich getrennten externen Kühlkreislauf 111 für einen Kühlvorgang repräsentiert erfasst.

In Schritt 208 wird die erfasste Kühlgröße mit einer vorgegebenen Soll-Kühlgröße verglichen. Die Soll-Kühlgröße repräsentiert einen notwendigen Kühlvorgang des elektrochemischen Energiespeichers 101 durch den externen Kühlkreislauf 111, um den elektrochemischen Energiespeicher 101 zu laden, insbesondere Schnellladen, zu können.

In Schritt 209 wird der elektrochemische Energiespeicher 101 mittels des zweiten Kühlkreislaufs 104 und/oder des externen Kühlkreislaufs 111 gekühlt, wenn die erfasste Kühlgröße die Soll-Kühlgröße überschreitet. Andernfalls wird das Verfahren in den Schritten 201, 204 fortgesetzt.

In Schritt 209 übernimmt der externe Kühlkreislauf 111, beispielsweise einer Ladestation, die Kühlung des elektrochemischen Energiespeichers 101, wodurch vorteilhafterweise unmittelbar ein Schnellladevorgang bzw. Ladevorgang gestartet werden kann. Insbesondere kann durch die räumliche Anordnung eine verbesserte Wärmeabfuhr bereitgestellt werden.

Vorteilhafterweise wird eine Vermischung des Kühlmittels des zweiten Kühlkreislaufs 104 und des Kühlmittels des externen Kühlkreislaufs 111 verhindert, da diese unterschiedlich sein können. Wird die Kühlung durch den externen Kühlkreislauf 111 ausgeschaltet, beispielsweise durch das Steuergerät 106 des elektrisch antreibbaren Fahrzeugs 102 oder der Ladestation, so wird über ein Unterdruckventil möglichst das komplette Kühlmittel aus dem externen Kühlkreis 111 entzogen und das Kühlmittel kann in den Kühlmitteltank 112 zurückfließen.

Das erfindungsgemäße Verfahren kann ferner bei verbundenem externen Kühlkreislauf 111 prüfen, ob ein Ladevorgang gestartet wird, um nicht auch bei kurzen Pausen ohne Ladevorgang Kühlmittel in den Kühlmitteltank 112 zurückpumpen zu müssen.

## Patentansprüche

1. Kühlsystem (100) für mindestens einen elektrochemischen Energiespeicher (101) eines elektrisch antreibbaren Fahrzeugs (102) umfassend:
- einen ersten Kühlkreislauf (103), welcher im Wesentlichen innerhalb des elektrochemischen Energiespeichers (101) angeordnet ist; und
- einen zweiten Kühlkreislauf (104), welcher vom ersten Kühlkreislauf (103) getrennt ist und im Wesentlichen außerhalb des elektrochemischen Energiespeichers (101) angeordnet ist,
wobei der zweite Kühlkreislauf (104) durch ein elektronisches Steuergerät (106) eingeschaltet wird, wenn ein Ladezustand des elektrochemischen Energiespeichers (101) einen vorgegebenen Soll-Ladezustand unterschreitet.

2. Kühlsystem (100) nach Anspruch 1, wobei der zweite Kühlkreislauf (104) einen Kühlmitteltank (107) mit Kühlmittel, mindestens eine Pumpe (108) zum Umwälzen des Kühlmittels durch Schläuche (110) des zweiten Kühlkreislaufs (104), mindestens ein Ventil (109, 116), Kühlrippen und/oder Kühlplatten umfasst.

3. Kühlsystem (100) nach einem der vorhergehenden Ansprüche, wobei das Ventil (109, 116) ein Mehrwegeventil umfasst, mittels dem der zweite Kühlkreislauf (104) mit einem von dem elektrisch antreibbaren Fahrzeugs (102) räumlich getrennten externen Kühlkreislauf (111) über mindestens einen Anschluss (115) verbindbar ist.

4. Kühlsystem (100) nach einem der vorhergehenden Ansprüche, wobei der erste Kühlkreislauf (103), der zweite Kühlkreislauf (104) und/oder der externe Kühlkreislauf (111) geschlossene Kühlkreisläufe sind.

5. Kühlsystem (100) nach einem der vorhergehenden Ansprüche, wobei der erste Kühlkreislauf (103), der zweite Kühlkreislauf (104) und/oder der externe Kühlkreislauf (111) ein flüssiges und/oder gasförmiges Kühlmittel umfassen.

6. Verfahren zum Betreiben eines Kühlsystems (100) nach einem der Ansprüche 1 bis 5 umfassend folgende Schritte:
a.1) (201) Erfassen einer Temperaturgröße, welche eine Temperatur des elektrochemischen Energiespeichers (101) repräsentiert;
a.2) (202) Vergleichen der erfassten Temperaturgröße mit einer vorgegebenen Soll-Temperaturgröße;
a.3) (203) Kühlen des elektrochemischen Energiespeichers (101) mittels eines ersten Kühlkreislaufs (103) in Abhängigkeit des Vergleichs;
b.1) (204) Erfassen einer Ladezustandsgröße des elektrochemischen Energiespeichers (101), welche einen Ladezustand des elektrochemischen Energiespeichers (101) repräsentiert;
b.2) (205) Vergleichen des erfassten Ladezustandsgröße mit einer vorgegebenen Soll-Ladezustandsgröße;
b.3) (206) Kühlen des elektrochemischen Energiespeichers (101) mittels eines zweiten Kühlkreislaufs (104) in Abhängigkeit des Vergleichs;
c.1) (207) Erfassen einer Kühlgröße, welche einen Anschluss des zweiten Kühlkreislaufs (104) an einen vom elektrisch antreibbaren Fahrzeugs (102) räumlich getrennten externen Kühlkreislauf (111) für einen Kühlvorgang repräsentiert;
c.2) (208) Vergleichen der erfassten Kühlgröße mit einer vorgegebenen Soll-Kühlgröße;
c.3) (209) Kühlen des elektrochemischen Energiespeichers (101) mittels des zweiten Kühlkreislaufs (104) und/oder des externen Kühlkreislaufs (111) in Abhängigkeit des Vergleichs;

7. Vorrichtung zum Betreiben eines Kühlsystems (100) für einen elektrochemischen Energiespeicher (101), umfassend mindestens einen Sensor (117), mindestens einen Schalter sowie mindestens ein Mittel, insbesondere ein elektronisches Batteriemanagementsteuergerät (106), welche eingerichtet sind, die Schritte des Verfahrens nach Anspruch 6 durchzuführen.

8. Computerprogramm, umfassend Befehle, die bewirken, dass die Vorrichtung nach Anspruch 7 die Verfahrensschritte nach Anspruch 6 ausführt.

9. Maschinenlesbares Speichermedium, auf dem das Computerprogramm nach Anspruch 8 gespeichert ist.

10. Verwendung eines Kühlsystems (100) gemäß einem der Ansprüche 1 bis 5 und/oder eines Verfahrens zum Betreiben eines Kühlsystems (100) nach Anspruch 6 für elektrochemische Energiespeicher für Elektrofahrzeuge, Brennstoffzellenfahrzeuge, Hybridfahrzeuge, Plug-In-Hybridfahrzeuge, Luftfahrzeuge, Pedelecs oder E-Bikes.
